Europäisches Patentamt

European Patent Office

Office européen des brevets

(11) Veröffentlichungsnummer: **0 297 166**
**B1**

# EUROPÄISCHE PATENTSCHRIFT

(45) Veröffentlichungstag der Patentschrift:
16.05.90

(21) Anmeldenummer: 87113886.3

(22) Anmeldetag: 23.09.87

(51) Int. Cl.⁵: **F16J 15/32**

(54) **Radialwellendichtring.**

(30) Priorität: 25.06.87 DE 3720930

(43) Veröffentlichungstag der Anmeldung:
04.01.89 Patentblatt 89/1

(45) Bekanntmachung des Hinweises auf die Patenterteilung:
16.05.90 Patentblatt 90/20

(84) Benannte Vertragsstaaten:
AT BE CH DE ES FR GB IT LI NL SE

(56) Entgegenhaltungen:
EP-A- 0 151 778
FR-A- 2 234 811
FR-A- 2 417 696
FR-A- 2 559 231

(73) Patentinhaber: **Firma Carl Freudenberg, Höhnerweg 2-4,
D-6940 Weinheim/Bergstrasse(DE)**

(72) Erfinder: **Rapp, Hermann, Dr., Ofenbergstrasse 36,
D-6942 Mörlenbach(DE)**
Erfinder: **Mader, Konrad, Wachenbergstrasse 33,
D-6940 Weinheim(DE)**
Erfinder: **Schwarz, Volker, Neckarstrasse 7,
D-6945 Hirschberg 2(DE)**

## Beschreibung

Die Erfindung betrifft einen Radialwellendichtring nach dem Oberbegriff von Anspruch 1.

Ein solcher Radialwellendichtring ist aus der DE-PC-3405513 entspricht EP-A 151 778 bekannt. Der derin zur Anwendung gelangende Versteifungsring besteht aus tiefgezogenem Stahlblech, was die Herstellung verteuert und eine Montage des gebrauchsfertigen Radialwellendichtringes mit Hilfe automatischer Montagewerkzeuge erschwert.

Der Erfindung liegt die Aufgabe zugrunde, einen Radialwellendichtring zu zeigen, der sich in vorteilhafter Weise von der vorstehend beschriebenen Ausführung unterscheidet.

Zur Lösung dieser Aufgabe wird erfindungsgemäß ein Radialwellendichtring vorgeschlagen, der die kennzeichnenden Merkmale von Anspruch 1 aufweist. Auf vorteilhafte Ausgestaltungen nehmen die Unteransprüche 2 bis 16 bezug.

Bie dem erfindungsgemäßen Radialwellendichtring ist der Versteifungsring auf der von dem zweiten Schenkel abgewandten Seite mit gleichmäßig auf dem Umfang verteilten, in axialer Richtung offenen Ausnehmungen versehen, wobei die Dichtlippe und die Ringdichtung durch die Ausnehmungen durchdringende Fortsätze einstückig verbunden sind. Die Ringdichtung und die Dichtlippe sind dadurch wesentlich fester mit dem Versteifungsring verbunden, wodurch auch bei Anwendung extrem harter Montagebedingungen, wie beispielsweise bei der Verwendung automatisch arbeitender Montagewerkzeuge zu beobachten, eine gegenseitige Trennung nicht mehr zu befürchten ist.

Auch ergibt sich innerhalb des Formgebungswerkzeuges, in welchem die Dichtlippe und die Ringdichtung an den Versteifungsring angeformt und verfestigt werden, eine wesentlich präzisere Zuordnung des Versteifungsringes zu dem verwendeten Werkzeug und damit zu der an sich angestrebten Position innerhalb des gebrauchsfertigen Radialwellendichtringes, was einerseits die Herstellung vereinfacht und andererseits die Gebrauchseigenschaften verbessert.

Der Versteifungsring des erfindungsgemäßen Radialwellendichtringes besteht bevorzugt aus einem sehr harten Kunststoff, dessen Elastizitätsmodul erheblich höher ist als derjenige des die Dichtlippe bildenden Werkstoffes. Sowohl der Dichtlippenwerkstoff als auch der Werkstoff des Versteifungsringes können alternativ im Press- und/oder im Spritzverfahren bzw. im Spritzprägeverfahren verarbeitet werden, wobei die beiden Werkstoffe auch faserverstärkt sein können, was insbesondere beim Versteifungsring zu einer Erhöhung der mechanischen Widerstandsfähigkeit führt. Die für die Formgebungsverfahren zur Anwendung gelangenden Formgebungswerkzeuge erlauben in axialer Richtung am Außendurchmesser einen exakten, maßlich präzise definierten Übergang zwischen den beiden Werkstoffkomponenten.

Der zweite Schenkel kann an dem von dem ersten Schenkel abgewandten Ende mit einer, bezogen auf seine äußere Umfangsfläche, radial nach innen verlagerten, in axialer Richtung vorstehenden und im wesentlichen ringförmigen Abstützfläche versehen sein. Die Abstützfläche hat im wesentlichen eine radiale Erstreckung, wobei die Ausdehnung in gleicher Richtung auf einen minimalen Wert und im Extremfalle auf eine kantenartig in Erscheinung tretende Fläche reduziert sein kann.

Auch in diesem Falle ergibt sich eine große Tragfähigkeit in Hinblick auf die rotationssymmetrische Gestalt des Versteifungsringes. Auch große axiale Lasten, die sich beispielsweise bei zu tiefem Einpressen in eine aufnehmende Gehäusebohrung ergeben können, haben daher im Regelfalle keine Beschädigung des Versteifungsringes zur Folge. Zugleich kann die Übergangszone zwischen den sich in axialer und den sich in radialer Richtung erstreckenden Umfangsflächen der aufnehmenden Bohrung großzügiger gestaltet sein. Es ist somit nicht mehr erforderlich, in diesem Bereich eine scharfkantige Ausdrehung vorzunehmen oder dort einen sehr engen Übergangsradius zwischen den beiden genannten Flächen anzubringen. Beides läßt sich nur relativ schwierig erzeugen und ist dementsprechend aufwendig.

Die Abstützfläche kann an wenigstens einer Stelle ihres Umfanges radial durchbrochen sein, um zu erreichen, daß abzudichtendes Medium, hierbei handelt es sich in den meisten Fällen um Öl, in den Bereich zwischen der außenliegenden Umfangsfläche des Versteifungsringes und der dieser Fläche gegenüberliegenden Umfangsfläche der aufnehmenden Gehäusebohrung einzudringen und die die statische Abdichtung bewirkende Ringdichtung zu erreichen vermag. Diese besteht aus elastomerem Werkstoff und hat daher bei den gebräuchlichen Qualitäten eine gewisse Quellbarkeit, was für ein gutes Abdichtungsergebnis und einen festen Sitz in der aufnehmenden Gehäusebohrung genutzt wird und beim Auftreten von Schwingungen günstig ist.

Der Versteifungsring kann an dem der Abstützfläche axial gegenüberliegenden Ende mit einer im wesentlichen ringförmigen Anschlagfläche versehen sein, die durch die vorstehend beschriebenen Ausnehmungen des Versteifungsringes in regelmäßig auf dem Umfang verteilten Flächenbereichen unterbrochen ist.

Über die Anschlagfläche werden die Montagekräfte eingeleitet, welche für das Einpressen des Radialwellendichtringes in die aufnehmende Gehäusebohrung erforderlich sind. Die Anschlagfläche bildet aus diesem Grunde eine Begrenzungsfläche des aus im wesentlichen unnachgiebigen Material bestehenden Versteifungsringes, wodurch dieser und damit der gesamte Radialwellendichtring dem verwendeten Montagewerkzeug in einer besonders präzisen Weise zugeordnet ist. Bei automatischen Montagen können sich dadurch keine von Fall zu Fall voneinander verschiedenen Einpreßtiefen der einzelnen Radialwellendichtringe ergeben.

Die Abstützfläche und die Anschlagfläche können in etwa denselben mittleren Durchmesser haben, wobei es sich als zweckmäßig erwiesen hat, wenn die den zweiten Schenkel in radialer Richtung nach innen und nach außen begrenzenden Umfangsflächen des Versteifungsringes in allen axialen Teilbereichen einen positiven Abstand von einer gedachten Zylinderfläche haben, deren Durchmesser mit dem mittleren Durchmesser der Abstützfläche und der Anschlagfläche übereinstimmt. Die Knicksteifigkeit des Versteifungsringes in axialer Richtung erfährt dadurch eine deutliche Verbesserung, insbesondere in Fällen, in denen der sich in axialer Richtung erstreckende, zweite Schenkel seines Profils, abgesehen von der Übergangszone in den ersten Schenkel, eine stetig zur Mitte seiner axialen Erstreckung zunehmende Dicke in radialer Richtung aufweist.

Die die statisch abdichtende Ringdichtung enthaltende Ausnehmung ist von der Ringdichtung völlig ausgefüllt und hat zweckmäßig eine in Richtung der Anschlagfläche zunehmende Tiefe in radialer Richtung.

Die sich hierdurch ergebende, bezogen auf die Dichtungsachse, geneigte Kegelfläche schließt mit der Dichtungsachse zweckmäßig einen sehr kleinen Winkel von 3 bis 15° ein, was einerseits das axiale Einpressen des erfindungsgemäßen Radialwellendichtringes in die aufnehmende Gehäusebohrung erleichtert und andererseits dem montierten Radialwellendichtring einen besonders festen Sitz in der aufnehmenden Bohrung verleiht. Wird auf dem montierten Radialwellendichtring eine in axialer Richtung nach außen gerichtete Kraft ausgeübt, so bedingt das eine radiale Verpressung der Ringdichtung zwischen der vorstehend angesprochenen Kegelfläche der dieser gegenüberliegenden Gehäusewandung. Beide sind völlig unnachgiebig, was in Verbindung mit der Inkompressiblität des die Ringdichtung bildenden, gummielastischen Werkstoffes eine nahezu unlösbare Verbindung zwischen dem montierten Radialwellendichtring und der aufnehmenden Gehäusebohrung ergibt.

Die Ausnehmung kann in radialer Richtung nach innen von gleichmäßig auf dem Umfang verteilten Flächenbereichen begrenzt sein, welche einen voneinander abweichenden Abstand von der Dichtungsachse haben. Neben einer verbesserten Nachgiebigkeit der Ringdichtung, die für die Montagevorgänge erwünscht ist, resultiert hieraus eine Vergrößerung der gegenseitigen Verbindungsfläche zwischen dem Versteifungsring und der Ringdichtung, was die Haftfestigkeit der Ringdichtung an dem Versteifungsring vergrößert. Die Flächenbereiche können gleichmäßig ineinander übergehend ausgebildet sein und bilden in diesem Falle eine die Dichtungsachse umschließende, gleichmäßig gewählte Fläche. Scharfe Übergangszonen zwischen dem Versteifungsring und der Ringdichtung sind in diesem Falle nicht vorhanden. Die Gefahr des Auftretens von gegenseitigen Ablösungen der die Ringdichtung und den Versteifungsring bildenden Werkstoffkörper von einander im Bereich von vor- oder zurückspringenden Ecken oder Kanten ist dadurch deutlich gemildert.

Die Ausnehmung kann an dem von der Abstützfläche abgewandten Ende durch eine Stirnfläche begrenzt sein. Diese schließt zweckmäßig mit der Dichtungsachse auf der der Ausnehmung zugewandten Seite einen Winkel (B) von etwa 90 bis 150° ein, wodurch ein Abreißen der Ringdichtung von dem Trägerring innerhalb des angesprochenen Bereiches, beispielsweise beim Einpressen in die aufnehmende Bohrung, mit Sicherheit vermieden wird.

Die Stirnfläche kann gleichmäßig gewölbt in die die Ausnehmung in radialer Richtung nach innen begrenzende Fläche übergehen. Die Haftfestigkeit zwischen den in diesem Bereich einander gegenüberliegenden Flächenzonen der Ringdichtung und des Versteifungsringes wird dadurch erhöht.

Des weiteren hat es sich als vorteilhaft erwiesen, wenn die Stirnfläche scharfkantig gegenüber der außenseitigen Umfangsfläche des Versteifungsringes abgegrenzt ist. Die nachträglich an den Versteifungsring angeformte Ringdichtung ist dadurch gegenüber dem aus einem abweichenden, polymeren Werkstoff bestehenden Versteifungsring präzise abgegrenzt, was den äußeren Eindruck verbessert und der Ringdichtung ein hochwertig erscheinendes Aussehen verleiht.

Bei Verwendung eines quellfähigen Werkstoffes für die Erzeugung der Ringdichtung und der Lippendichtung hat es sich als generell ausreichend erwiesen, wenn der Außendurchmesser der Ringdichtung im wesentlichen mit dem Durchmesser der äußeren Umfangsfläche des Versteifungsringes und der Bohrung übereinstimmt. Die notwendige Anpressung der Ringdichtung an die Wandung der aufnehmenden Bohrung beruht in diesem Falle auf der sich durch die Benetzung mit dem abgedichteten Medium ergebenden Aufquellung der Ringdichtung. Ist in dieser Hinsicht jedoch nicht eine völlige Sicherheit gegeben, beispielsweise durch Verwendung bestimmter hochwertiger, gummielastischer Werkstoffe, dann hat es sich als zweckmäßig erwiesen, der Ringdichtung einen Außendurchmesser zu geben, der geringfügig größer ist als der Durchmesser der äußeren Umfangsfläche des Versteifungsringes.

Auch vollkommen unabhängig von jeder beliebigen Benetzung wird in diesem Falle ein ausreichendes Abdichtungsergebnis im Bereich der gegenseitigen Berührungszone zwischen der Ringdichtung und der aufnehmenden Gehäusebohrung erreicht.

Der Gegenstand der vorliegenden Erfindung wird nachfolgend anhand der als Anlage beigefügten Zeichnung weitererläutert. Es zeigen:

Figur 1 eine beispielhafte Ausführung des erfindungsgemäßen Radialwellendichtringes in halbgeschnittener Darstellung.

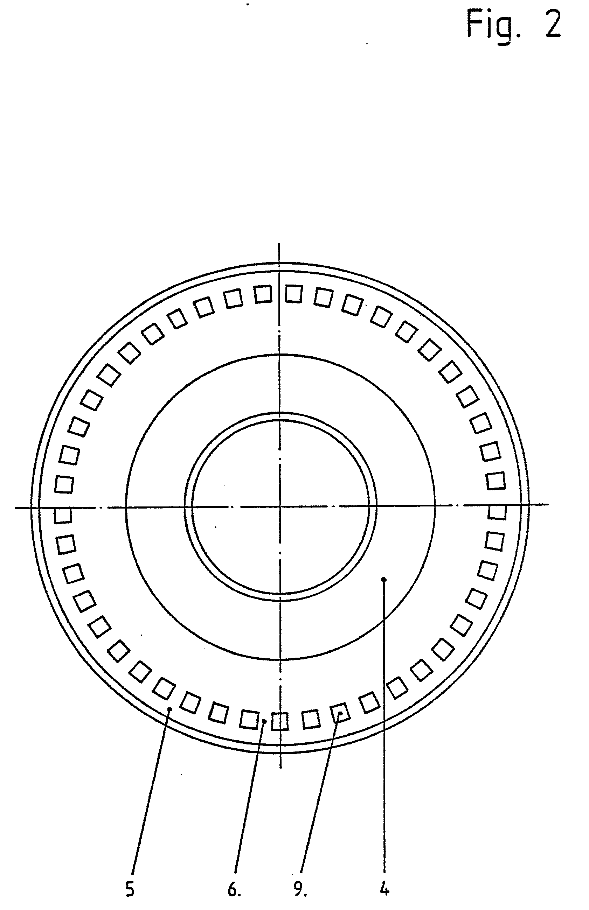

Figur 2 den in Figur 1 gezeigten Radialwellendichtring in einer Ansicht von links.

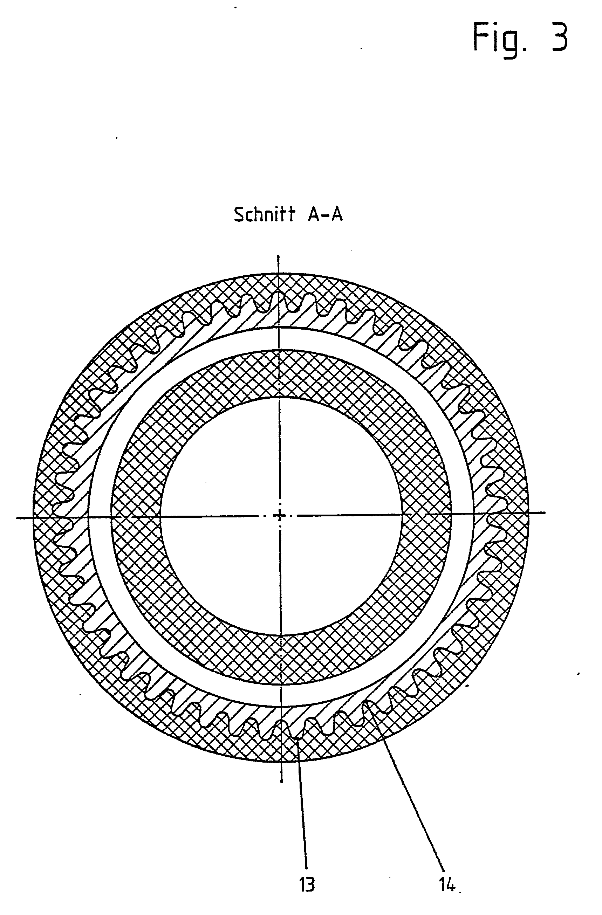

Figur 3 eine entlang der Linie A - A geschnittene Wiedergabe des Radialwellendichtringes gemäß Figur 1.

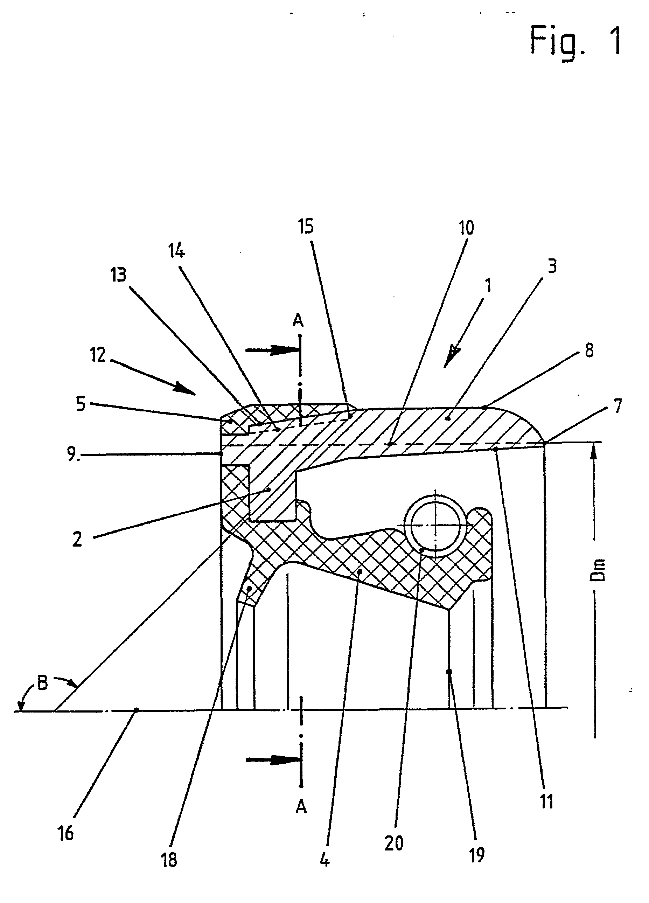

Der in Figur 1 gezeigte Radialwellendichtring besteht aus dem Versteifungsring 1 aus einem zähharten Kunststoff, der ein winkelförmiges Profil aufweist mit einem sich in radialer Richtung nach innen erstreckenden ersten Schenkel 2 und einem sich in axialer Richtung erstreckenden zweiten Schenkel 3. Beide Schenkel sind einstückig ineinander übergehend ausgebildet.

Der erste Schenkel 2 ist auf der von dem zweiten Schenkel 3 abgewandten Seite mit gleichmäßig auf dem Umfang verteilten, in axialer Richtung offenen Ausnehmungen versehen, durch welche die Fortsetzung 6 der Ringdichtung und der Lippendichtung hindurchgreifen, was eine ineinander übergehende Ausbildung der beiderseitigen Werkstoffkörper bedingt. Die Ringdichtung 5, die Fortsätze 6 und die Dichtlippe 4 bestehen somit aus einem ineinander übergehenden Werkstoffkörper aus gummielastischem Dichtungsmaterial.

Dieses ist relativ weichelastisch und durch unmittelbares Anformen und Vulkanisieren mit dem den Versteifungsring 1 bildenden Werkstoffkörper verbunden.

Die Dichtlippe 4 weist die einstückig angeformte Staublippe 18 auf sowie eine Dichtkante 19, in deren Bereich auf ihrer Außenseite eine Ringwendelfeder 20 aus metallischem Werkstoff vorgesehen ist. Über lange Zeiträume ist dadurch eine gleichmäßige Anpressung der Dichtkante 19 an die abzudichtende, nicht dargestellte Welle gewährleistet, was die Erzielung eines Abdichtungsergebnisses gewährleistet, das höchsten Ansprüchen gerecht wird.

Der Versteifungsrsing 1 weist an den einander gegenüberliegenden Enden die Anschlagfläche 9 und die Abstützfläche 7 auf. Beide haben übereinstimmende, mittlere Durchmesser, die in Figur 1 durch eine gedachte Zylinderfläche 10 verbunden sind. Die äußere Umfangsfläche 8 und die innere Umfangsfläche 11 des zweiten Schenkels des Profils des Versteifungsringes haben jeweils einen positiven Abstand von der Zylinderfläche 10, was dem sich in axialer Richtung erstreckenden, zweiten Schenkel 3 des Versteifungsringes 1 eine ausgezeichnete Knicksteifigkeit verleiht. Der erfindungsgemäße Radialwellendichtring kann dadurch problemlos montiert werden, wobei auch ein hartes Anschlagen an den Boden der aufnehmenden Gehäusebohrung in Kauf genommen werden kann. Hinsichtlich der Verwendung automatisch arbeitender Montagewerkzeuge ergibt sich dadurch eine deutliche Vereinfachung.

Die Abstützfläche 7 hat eine radialen Abstand von der äußeren Umfangsfläche 8 des Versteifungsringes 1. Die Übergangszone zwischen dem Boden der aufnehmenden Gehäusebohrung und deren innerer Umfangsfläche kann dadurch relativ großzügig gestaltet werden.

Es ist somit in diesem Bereich nicht mehr erforderlich, scharfkantige Ausdrehungen, die nur teuer zu erzeugen sind, anzubringen.

Die der Abstützfläche 7 axial gegenüberliegende Anschlagfläche 9 bildet einen Bestandteil des zähharten und im wesentlichen unnachgiebigen Versteifungsringes 1. In automatisch arbeitenden Montagewerkzeugen ist dadurch eine präzise Zuordnung zwischen dem Radialwellendichtring und dem Montagewerkzeug auch während der Durchführung des Einpreßvorganges gewährleistet, was es erleichtert, einen präzisen Sitz in der aufnehmenden Gehäusebohrung zu erreichen.

Der zweite Schenkel 3 weist radial außerhalb des ersten Schenkels eine Ausnehmung 12 auf, in welche die Ringdichtung 5 angeordnet ist. Die Ausnehmung ist in radialer Richtung nach innen im wesentlichen durchn die Flächen 13, 14 begrenzt, die einen voneinander abweichenden Abstand von der Dichtungsachse 16 haben und die in Umfangsrichtung wellenförmig ineinander übergehend ausgebildet sind. Des weiteren sind die Flächen 13, 14 und ebenso die Übergangszonen zwischen beiden unter einem flachen Winkel zur Dichtungsachse 16 geneigt, wodurch die in ihrem Profil angepaßte Ringdichtung 5 beim axialen Einpressen der in Figur 1 gezeigten Ringdichtung in die aufnehmende Gehäusebohrung nach rechts in eine Richtung nach links leicht auszuweichen vermag. Der Einpreßvorgang wird dadurch vereinfacht. Dennoch ergibt sich durch den geringfügig größeren Außendurchmesser der Ringdichtung 5, bezogen auf den mit dem Durchmesser der Bohrung im wesentlichen übereinstimmenden Durchmesser der äußeren Umfangsfläche 8 des Versteifungsringes eine gute radiale Verpressung der Ringdichtung 5 zwischen den sie in radialer Richtung beiderseits umschließenden Flächen.

Neben einer guten Abdichtung des Radialwellendichtringes gegenüber der aufnehmenden Gehäusebohrung wird dadurch ein fester Sitz erreicht. Letzterer wird weiterhin dadurch begünstigt, daß eine linksgerichtete Relativbewegung des eingebauten Radialwellendichtringes, bezogen auf die aufnehmende Gehäusebohrung (Figur 1) zu einer extrem hohen radialen Verpressung der Ringdichtung 5 in bezug auf die sie innen- und außenseitig umschließenden Ringflächen führen würde. Die Ringdichtung 5 besteht jedoch aus einem inkompressiblen Material. Eine zerstörungsfreie Entnahme des fertig montierten Radialwellendichtringes ist dadurch nicht ohne weiteres möglich, des weiteren kein Loslösen des montierten Radialwellendichtringes infolge der Einleitung von Schwingungen.

**Patentansprüche**

1. Radialwellendichtring, bestehend aus einem Versteifungsring (1), der ein winkelförmiges Profil mit einem in radialer Richtung nach innen weisenden ersten Schenkel (2) und einen sich in axialer Richtung erstreckenden zweiten Schenkel mit einer außenseitigen Ausnehmung in dem den ersten Schenkel (3) umschließenden Bereich, wobei an dem radial nach innen weisenden Ende des ersten Schenkels (2) eine sich im wesentlichen parallel zu dem zweiten Schenkel (3) erstreckende Dichtlippe (4) und in der Ausnehmung eine im wesentlichen radial nach außen vorspringende Ringdichtung (5) aus gummielastischem Werkstoff vorgesehen ist, dadurch gekennzeichnet, daß der erste Schenkel (2) des Versteifungsringes (1) auf der von dem zweiten Schenkel (3) abweisenden Seite mit gleichmäßig auf dem Umfang verteilten, in axialer Richtung offenen Ausnehmungen versehen ist und daß die Dichtlippe (4) und die Ringdichtung (5) durch die Ausnehmung durchdringende Fortsätze (6) einstückig verbunden sind.

2. Radialwellendichtring nach Anspruch 1, dadurch gekennzeichnet, daß der Versteifungsring (1) aus Kunststoff besteht und daß der die Dichtlippe (4) und die Ringdichtung (5) bildende Werkstoffkörper unmittelbar an den Versteifungsring (1) angeformt ist.

3. Radialwellendichtring nach Anspruch 1 bis 2, dadurch gekennzeichnet, daß der zweite Schenkel (3) an dem von dem ersten Schenkel (2) abweisenden Ende mit einer, bezogen auf die äußere Umfangsfläche (8) radial nach innen verlagerten, in axialer Richtung vorstehenden und im wesentlichen ringförmigen Abstützfläche (7) versehen ist.

4. Radialwellendichtring nach Anspruch 3, dadurch gekennzeichnet, daß die Abstützfläche (7) an wenigstens einer Stelle ihres Umfanges radial durchbrochen ist.

5. Radialwellendichtring nach Anspruch 1 bis 4, dadurch gekennzeichnet, daß der Versteifungsring (1) an dem der Abstützfläche (7) axial gegenüberliegenden Ende mit einer im wesentlichen ringförmig ausgebildeten Anschlagfläche (9) versehen ist und daß die Anschlagfläche (9) durch die Ausnehmungen des Versteifungsringes (1) unterbrochen ist.

6. Radialwellendichtring nach Anspruch 5, dadurch gekennzeichnet, daß die Abstützfläche (7) und die Anschlagfläche (9) etwa denselben mittleren Durchmesser (Dm) haben.

7. Radialwellendichtring nach Anspruch 6, dadurch gekennzeichnet, daß die mittleren Durchmesser der Abstützfläche (7) und der Anschlagfläche (9) durch eine gedachte Zylinderfläche (10) verbunden sind und daß der zweite Schenkel (3) zwischen der Abstützfläche (7) und der Anschlagfläche durchgehend durch äußere und innere Umfangsflächen (8, 11) begrenzt ist, die einen positiven Abstand von der Zylinderfläche (10) haben.

8. Radialwellendichtring nach Anspruch 7, dadurch gekennzeichnet, daß der zweite Schenkel (3), abgesehen von dessen Übergangszone in den ersten Schenkel (2), eine stetig zur Mitte seiner axialen Erstreckung zunehmenden Dicke in radialer Richtung aufweist.

9. Radialwellendichtring nach Anspruch 1 bis 8, dadurch gekennzeichnet, daß die Ausnehmung (12) eine in Richtung der Anschlagfläche (9) zunehmende Tiefe in radialer Richtung aufweist.

10. Radialwellendichtring nach Anspruch 9, dadurch gekennzeichnet, daß die Ausnehmung (12) in radialer Richtung nach innen von gleichmäßig auf dem Umfang verteilten Flächenbereichen (13, 14) begrenzt ist, die einen voneinander abweichenden Abstand von der Dichtungsachse (16) haben.

11. Radialwellendichtring nach Anspruch 10, dadurch gekennzeichnet, daß die Flächenbereiche (13, 14) wenigstens in Umfangsrichtung gleichmäßig ineinander übergehend ausgebildet sind.

12. Radialwellendichtring nach Anspruch 1 bis 11, dadurch gekennzeichnet, daß die Ausnehmung (12) an dem von der Abstützfläche (9) abgewandten Ende durch eine Stirnfläche (15) begrenzt ist.

13. Radialwellendichtring nach Anspruch 12, dadurch gekennzeichnet, daß die Stirnfläche (15) und die Dichtungsachse (16) auf der der Ausnehmung (12) zugewandten Seite einen Winkel (B) von 90 bis 150° einschließen.

14. Radialwellendichtring nach Anspruch 13, dadurch gekennzeichnet, daß die Ausnehmung (12) in radialer Richtung innenseitig durch eine Fläche (13, 14) begrenzt ist, die gleichmäßig gewölbt in die Stirnfläche (15) übergeht.

15. Radialwellendichtring nach Anspruch 1 bis 14, dadurch gekennzeichnet, daß die Stirnfläche (15) und die außenseitige Umfangsfläche (8) einander scharfkantig begrenzen.

16. Radialwellendichtring nach Anspruch 1 bis 15, dadurch gekennzeichnet, daß der Außendurchmesser der Ringdichtung (5) größer ist als der Durchmesser der außenseitigen Umfangsfläche (8) des Versteifungsringes (1).

**Revendications**

1. Bague d'étanchéité radiale pour arbre constituée d'une bague de renfort (1) à profil angulaire, avec une première branche (2) s'étendant vers l'intérieur en direction radiale et une deuxième branche (3) s'étendant en direction axiale avec une cavité extérieure dans la zone entourant la première branche tandis que, sur l'extrémité de la première branche (2) s'étendant radialement vers l'intérieur, se trouve une lèvre d'étanchéité (4) disposée essentiellement parallèlement à la deuxième branche (3) et, dans la cavité, un joint de bague (5) faisant saillie essentiellement dans le sens radial vers l'extérieur et en matériau élastique, caractérisée en ce que la première branche (2) de la bague de renfort (1) est pourvue, sur le côté opposé à la deuxième branche (3), de cavités ouvertes en direction axiale et réparties uniformément sur la périphérie et que la lèvre d'étanchéité (4) et le joint de bague (5) sont assemblés en une pièce par les prolongements (6) traversant la cavité.

2. Bague d'étanchéité radiale pour arbre selon la revendication 1, caractérisée en ce que la bague de renfort (1) est en matière plastique et que l'élément de matériau constituant la lèvre d'étanchéité (4) et la joint de bague (5) est formé directement sur la bague de renfort (1).

3. Bague d'étanchéité radiale pour arbre selon les revendications 1 et 2, caractérisée en ce que la deuxième branche (3) est pourvue d'une surface d'appui (7) essentiellement annulaire faisant saillie en direction axiale et déplacée radialement vers l'intérieur par rapport à la surface périphérique extérieure (8) et a son extrémité opposée à la première branche (2).

4. Bague d'étanchéité radiale pour arbre selon la revendication 3, caractérisée en ce que la surface d'appui (7) est interrompue radialement à au moins un endroit de sa périphérie.

5. Bague d'étanchéité radiale pour arbre selon les revendications 1 à 4, caractérisée en ce que la bague de renfort (1) est pourvue, à son extrémité opposée axialement à la surface d'appui (7), d'une surface de butée (9) de forme essentiellement annulaire, et que la surface de butée (9) est interrompue par les cavités de la bague de renfort (1).

6. Bague d'étanchéité radiale pour arbre selon la revendication 5, caractérisée en ce que la surface d'appui (7) et la surface de butée (9) ont à peu près le même diamètre moyen (Dm).

7. Bague d'étanchéité radiale pour arbre selon la revendication 6, caractérisée en ce que le diamètre moyen de la surface d'appui (7) et de la surface de butée (9) sont assemblés par une surface cylindrique imaginaire (10) et que la deuxième branche (3) est délimitée entre la surface d'appui (7) et la surface de butée de manière continue par des surfaces périphériques (8, 11) extérieures et intérieures qui ont une distance positive par rapport à la surface cylindrique (10).

8. Bague d'étanchéité radiale pour arbre selon la revendication 7, caractérisée en ce que la deuxième branche (3) présente, indépendamment de sa zone de transition dans la première branche (2), une épaisseur continuellement croissante vers le milieu de son extension axiale en direction radiale.

9. Bague d'étanchéité radiale pour arbre selon les revendications 1 à 8, caractérisée en ce que la cavité (12) présente une profondeur augmentant en direction de la surface de butée (9) en direction radiale.

10. Bague d'étanchéité radiale pour arbre selon la revendication 9, caractérisée en ce que la cavité (12) est délimitée en direction radiale par des éléments de surface (13, 14) répartis uniformément sur la périphérie et s'étendant vers l'intérieur en direction radiale, qui ont une distance variable par rapport à l'axe d'étanchéité (16).

11. Bague d'étanchéité radiale pour arbre selon la revendication 10, caractérisée en ce que les éléments de surface (13, 14) sont constitués de manière à se continuer les uns les autres au moins en direction de la périphérie.

12. Bague d'étanchéité radiale pour arbre selon les revendications 1 à 11, caractérisée en ce que la cavité (12) est délimitée par une surface frontale (15) à l'extrémité opposée à la surface d'appui (9).

13. Bague d'étanchéité radiale pour arbre selon la revendication 12, caractérisée en ce que la surface frontale (15) et l'axe d'étanchéité (16) forment, du côté tourné vers la cavité (12), un angle (B) de 90 à 150°.

14. Bague d'étanchéité radiale pour arbre selon la revendication 13, caractérisée en ce que la cavité (12) est délimitée intérieurement en direction radiale par une surface (13, 14) qui se continue régulièrement par une surface cintrée vers la surface frontale (15).

15. Bague d'étanchéité radiale pour arbre selon les revendications 1 à 14, caractérisée en ce que la surface frontale (15) et la surface périphérique extérieure (8) se délimitent mutuellement suivant une arête vive.

16. Bague d'étanchéité radiale pour arbre selon les revendications 1 à 15, caractérisée en ce que le diamètre extérieur du joint de bague (5) est supérieur au diamètre de la surface périphérique extérieure (8) de la bague de renfort (1).

## Claims

1. A lip seal composed of a reinforcing ring (1) which has an angular profile with a first arm (2) pointing radially inwards and a second arm (3) extending axially with a recess on the outside in the region surrounding the first arm, a sealing lip (4), extending essentially parallel to the second arm (3), being provided on the end of the first arm (2) pointing radially inwards, and an annular seal (5) made of resilient elastic material and projecting essentially radially outwards being provided in the recess, characterised in that the first arm (2) of the reinforcing ring (1) is provided on the side facing away from the second arm (3) with recesses evenly distributed on the circumference and open axially, and in that the sealing lip (4) and the annular seal (5) are connected in one piece by the bridge pieces (6) penetrating the recess.

2. A lip seal according to claim 13 characterised in that the reinforcing ring (1) is composed of plastics material, and in that the material body forming the sealing lip (4) and the annular seal (5) is moulded directly onto the reinforcing ring (1).

3. A lip seal according to claim 1 or 2, characterised in that, at the end facing away from the first arm (2), the second arm (3) is provided with an essentially annular support surface (7) projecting axially and, relative to the outer circumferential surface (8), displaced radially inwards.

4. A lip seal according to claim 3, characterised in that the support surface (7) is penetrated radially at at least one point of its circumference.

5. A lip seal according to any of claims 1 to 4, characterized in that, at the end axially opposite the support surface (7), the reinforcing ring (1) is provided with a stop surface (9) of essentially annular construction and in that the stop surface (9) is interrupted by the recesses of the reinforcing ring (1).

6. A lip seal according to claim 5, characterized in that the support surface (7) and the stop surface (9) have approximately the same mean diameter (Dm).

7. A lip seal according to claim 6, characterized in that the mean diameters of the support surface (7) and the stop surface (9) are connected by an imagined cylindrical surface (10), and in that the second arm (3) is continuously limited between the support surface (7) and the stop surface by outer and inner circumferential surfaces (8, 11) which have a positive distance from the cylindrical surface (10).

8. A lip seal according to claim 7, characterized in that the second arm (3), apart from its transition zone into the first arm (2), has a thickness in radial direction which increases steadily towards the centre of its axial extent.

9. Lip seal according to any of claims 1 to 8, characterized in that the recess (12) has a depth in radial direction which increases in the direction of the stop surface (9).

10. Lip seal according to claim 9, characterized in that the recess (12) is limited radially inwards by surface regions (13, 14) evenly distributed on the circumference, which surface regions (13, 14) have a mutually diverging distance from the sealing axis (16).

11. A lip seal according to claim 10, characterized in that the surface regions (13, 14) are constructed, at least in circumferential direction, to have an even transition into one another.

12. A lip seal according to any of claims 1 to 11, characterized in that, at the end facing away from the support surface (9), the recess (12) is limited by a front surface (15).

13. A lip seal according to claim 12, characterized in that the front surface (15) and the sealing axis (16) enclose an angle (B) of 90 to 150° on the side facing the recess (12).

14. A lip seal according to claim 13, characterized in that the recess (12) is limited radially on the inside by a surface (13, 14) which, evenly curved, passes into the front surface (15).

15. A lip seal according to any of claims 1 to 14, characterized in that the front surface (15) and the outside circumferential surface (8) limit each other with sharp edges.

16. A lip seal according to any of claims 1 to 15, characterized in that the outer diameter of the annular seal (5) is larger than the diameter of the outside circumferential surface (8) of the reinforcing ring (1).

Fig. 1

Fig. 2

5          6.     9.      4

Fig. 3

Schnitt A-A

13    14